# EUROPÄISCHE PATENTANMELDUNG

(11) **EP 4 295 668 A1**
(43) Veröffentlichungstag der Anmeldung: **27.12.2023**
(21) Anmeldenummer: 23181077.1
(22) Anmeldetag: 22.06.2023
(51) Int. Cl.: A01F 29/10, A01F 29/14, A01D 43/08

(54) **EINZUGSANORDNUNG FÜR EINE LANDMASCHINE**

(30) Priorität: 24.06.2022 DE 102022115799
(71) Anmelder: Maschinenfabrik Bernard Krone GmbH & Co. KG, 48480 Spelle (DE)
(72) Erfinder: Ensink, Holger, 49835 Wietmarschen (DE)

(57) **Zusammenfassung**

Die Erfindung betrifft eine Einzugsanordnung (1) für eine Landmaschine (50), aufweisend einen Fahrzeugrahmen (2) sowie einen Einzug (10) mit einem Einzugsrahmen (11), an welchem ein oberes Walzenpaket (13), mit einer Mehrzahl von oberen Einzugswalzen (14), sowie ein unteres Walzenpaket (15), mit einer Mehrzahl von unteren Einzugswalzen (16), gelagert sind, wobei der Einzugsrahmen (11) gegenüber dem Fahrzeugrahmen (2) zwischen einer Absenkposition und einer Hubposition verstellbar ist und wenigstens ein Walzenpaket (13, 15) gegenüber dem Einzugsrahmen (11) verstellbar ist, wobei beide Walzenpakete (13, 15) durch wenigstens einen am Fahrzeugrahmen (2) angeordneten Antrieb (3) antreibbar sind. Um ein verbessertes Antriebskonzept für einen höhenverstellbaren Einzug mit variabler Öffnungsweite bereitzustellen, ist erfindungsgemäß vorgesehen, dass, der wenigstens eine Antrieb (3) über einen ersten Kraftübertragungsweg (20), aufweisend eine erste Gelenkwelle (21), mit dem oberen Walzenpaket (13) verbunden ist und über einen zum ersten Kraftübertragungsweg (20) mechanisch parallelen zweiten Kraftübertragungsweg (30), aufweisend eine zweite Gelenkwelle (31), mit dem unteren Walzenpaket (15) verbunden ist, wobei beide Gelenkwellen (21, 31) bezüglich einer Querachse (Y) seitlich des Einzugs (10) verlaufen und sich bezüglich einer Längsachse (X) vorwärts erstrecken.

## Beschreibung

Die vorliegende Erfindung betrifft eine Einzugsanordnung für eine Landmaschine, nach dem Oberbegriff von Anspruch 1, sowie eine Landmaschine nach dem Oberbegriff von Anspruch 15.

Feldhäcksler werden in der Landwirtschaft zur Aufnahme, Verarbeitung und Verladung von Erntegut wie Gras, Heu, Mais oder dergleichen verwendet. Das Erntegut wird zunächst mit einem Erntevorsatz erfasst, der z.B. im Fall von Gras oder Heu das Erntegut vom Boden aufnehmen oder z.B. im Fall von Mais das Erntegut aus dem Bestand ernten kann. Der Erntevorsatz, welcher in der Regel auswechselbar ist, führt das Erntegut zu einer Einzugsvorrichtung bzw. Vorpressvorrichtung, die auch kurz als Einzug bezeichnet wird. Der Einzug führt das Erntegut wiederum einer Häckselvorrichtung zu und presst es zusammen, um den Häckselvorgang zu erleichtern. Die Häckselvorrichtung weist normalerweise eine drehbar angetriebene Häckseltrommel auf, an welcher ein Zerkleinern bzw. Schneiden des Ernteguts erfolgt. Der Häckselvorrichtung sind weitere Vorrichtungen nachgeordnet, z.B. ein Aufbereiter oder sog. Corncracker, der Maiskörner aufquetscht, sowie ein Nachbeschleuniger, der das Erntegut auf eine hohe Geschwindigkeit beschleunigt, so dass dieses durch einen Auswurfbogen ausgeworfen wird.

Die Einzugsvorrichtung weist normalerweise ein oberes Walzenpaket sowie ein unteres Walzenpaket auf, die an einem Einzugsrahmen gelagert sind und jeweils eine Mehrzahl von Einzugswalzen aufweisen. In aller Regel stehen sich jeweils eine obere Einzugswalze und eine untere Einzugswalze in vertikaler Richtung als Walzenpaare gegenüber. Die oberen Einzugswalzen sind gegen die unteren Einzugswalzen verstellbar, um eine Öffnungsweite zu verändern. Letzteres ist notwendig, um eine Anpassung an den sich ändernden Umfang des Erntegutstroms zu ermöglichen. Während das untere Walzenpaket stationär bezüglich des Einzugsrahmens angeordnet sein kann, muss das obere Walzenpaket somit gegenüber dem Einzugsrahmen verstellbar sein. Außerdem ist der Einzug insgesamt gegenüber einem Fahrzeugrahmen des Feldhäckslers verstellbar, so dass er für den Erntevorgang abgesenkt werden kann, während er bspw. bei einem Wendevorgang angehoben werden kann. Die genannten Verstellbewegungen müssen beim Antrieb der Einzugswalzen berücksichtigt werden. Typischerweise ist der eigentliche Antrieb, z.B. ein Hydraulikmotor, am Fahrzeugrahmen angeordnet und die Antriebskraft wird über Getriebe auf die Einzugswalzen übertragen, wobei das jeweilige Getriebe dazu ausgelegt ist, die Verstellbewegungen zu kompensieren.

Aus der DE 100 21 663 A1 ist ein System bekannt, bei welchem die Antriebskraft von einem fahrzeugseitigen Motor zunächst über eine vorwärtsverlaufende Gelenkwelle zu einem unteren Walzengetriebe am Einzug übertragen wird, welches auf Höhe der unteren Einzugswalzen angeordnet ist. Dieses untere Walzengetriebe überträgt einen Teil der Antriebskraft auf die unteren Einzugswalzen, während ein anderer Teil über eine aufwärts verlaufende Welle weitergeleitet wird. Diese ist über ein Winkelgetriebe an eine Gelenkwelle gekoppelt, die sich in Querrichtung durch den Einzugsrahmen erstreckt und auf einer in Querrichtung gegenüberliegenden Seite an ein Getriebe gekoppelt ist, das die oberen Einzugswalzen antreibt. Die oberen Einzugswalzen sind gegenüber dem Einzugsrahmen in Führungen gleitverschieblich angeordnet. Der Ausgleich der Bewegungen des oberen Walzenpakets erfolgt vornehmlich über die quer verlaufende Gelenkwelle, die als Doppelgelenkwelle ausgeführt und teleskopierend ausgebildet ist, um einen Längenausgleich zu ermöglichen.

Wenngleich sich dieses System in der Praxis gut bewährt hat, bringt seine Realisierung verschiedene Probleme mit sich. Die mehrfache Umleitung der Antriebskraft erfordert eine hohe Zahl von Getriebekomponenten. Die aufwärts führende Welle kann in der Regel nicht starr ausgebildet sein, sondern muss mit einem Doppelgelenk versehen sein, um eventuelle Verspannungen durch Verformungen und Fluchtungsfehler auszugleichen, die zwischen dem unteren Walzengetriebe und dem Winkelgetriebe auftreten können. Die quer verlaufende Gelenkwelle ist in ihrer Länge durch die Breite des Einzugs beschränkt. Trotz ihrer somit geringen Länge muss sie erhebliche Ausgleichsbewegungen ausführen, was nur mit Spezialgelenken realisierbar ist. Außerdem wird ein spezielles Führungsprofil für die teleskopierenden Wellenhälften benötigt, da diese bei maximaler Auszuglänge nur noch eine geringfügige Überlappung aufweisen. Somit bildet die quer verlaufende Gelenkwelle ein kostenintensives Spezialbauteil. Außerdem werden durch Reibungskräfte zwischen den Wellenhälften seitliche Schiebekräfte auf das obere Walzenpaket erzeugt. Die Gelenkwelle durchquert den Einzugsrahmen, der im Wesentlichen nach außen abgedichtet sein soll, um ein Austreten von Erntegut zu verhindern, was Einbau und Wartung dieser Gelenkwelle erschwert. Sofern die vom Fahrzeugrahmen kommende Antriebswelle auf der gleichen Seite angeordnet ist wie eine Antriebswelle, mittels der ein angekoppelter Vorsatz angetrieben wird, ergeben sich außerdem Probleme hinsichtlich des Bauraums auf dieser Seite (normalerweise der linken Seite). Beim Anheben des Einzugs führt die Bauform der Antriebswelle außerdem zu Gleichlaufschwankungen, d.h. obwohl der fahrzeugseitige Antrieb mit konstanter Winkelgeschwindigkeit betrieben wird, ändern sich die Rotationsgeschwindigkeiten der angetriebenen Einzugswalzen zyklisch. Die hierdurch entstehenden Kräfte bzw. Drehmomente führen zu einer mechanischen Belastung und können in einigen Fällen zu sich aufschaukelnden Schwingungen im Einzug führen.

Aufgabe der Erfindung ist es, ein verbessertes Antriebskonzept für einen höhenverstellbaren Einzug mit variabler Öffnungsweite bereitzustellen.

Die Aufgabe wird gelöst mit einer Einzugsanordnung mit den Merkmalen des unabhängigen Patentanspruchs 1. Vorteilhafte Ausführungsformen sind den abhängigen Ansprüchen entnehmbar.

Dafür wird eine Einzugsanordnung für eine Landmaschine geschaffen, aufweisend einen Fahrzeugrahmen sowie einen Einzug mit einem Einzugsrahmen, an welchem ein oberes Walzenpaket, mit einer Mehrzahl von oberen Einzugswalzen, sowie ein unteres Walzenpaket, mit einer Mehrzahl von unteren Einzugswalzen, gelagert sind, wobei der Einzugsrahmen gegenüber dem Fahrzeugrahmen zwischen einer Absenkposition und einer Hubposition verstellbar ist und wenigstens ein Walzenpaket gegenüber dem Einzugsrahmen verstellbar ist, wobei beide Walzenpakete durch wenigstens einen am Fahrzeugrahmen angeordneten Antrieb antreibbar sind.

Der Begriff "Landmaschine" ist in diesem Zusammenhang nicht einschränkend auszulegen und bezeichnet jede Maschine, die in der Landwirtschaft eingesetzt werden kann. In der Regel ist die Landmaschine ein Feldhäcksler. In zusammengebautem Zustand weist die Landmaschine einen Einzug auf, mittels dessen zuvor aufgenommenes Erntegut ins Innere der Landmaschine transportiert und ggf. komprimiert werden kann. Der Einzug führt das Erntegut normalerweise einer weiteren Bearbeitungseinheit zu, welche insbesondere eine Häckselvorrichtung sein kann. Das Erntegut kann durch ein Vorsatzgerät wie ein Maisgebiss oder eine Pick-up aufgenommen werden, bevor es in den Einzug gelangt. Das Vorsatzgerät wird nachfolgend auch als Erntevorsatz oder Vorsatz bezeichnet. Die Einzugsanordnung weist den Einzug selbst auf, aber auch Elemente, die nicht zum Einzug an sich gehören. Insbesondere weist sie den Fahrzeugrahmen auf, also einen Rahmen der Landmaschine. Dieser verleiht der Landmaschine strukturelle Stabilität und kann bspw. auch eine Fahrerkabine, einen Antriebsmotor und/oder ein Fahrwerk der Landmaschine stützen. Ausdrücklich kann die Landmaschine allerdings auch als autonomes Fahrzeug ausgebildet sein und somit keine Fahrerkabine aufweisen.

Der Einzug weist einen Einzugsrahmen auf, an welchem ein oberes Walzenpaket, mit einer Mehrzahl von oberen Einzugswalzen, sowie ein unteres Walzenpaket, mit einer Mehrzahl von unteren Einzugswalzen, gelagert sind. Der Einzugsrahmen wiederum verleiht dem Einzug insgesamt mechanische Stabilität und dient zur zuverlässigen Lagerung der beiden Walzenpakete. Jedes Walzenpaket kann grundsätzlich eine beliebige Mehrzahl von Einzugswalzen aufweisen, üblicherweise sind zwei oder drei Einzugswalzen vorgesehen. Dabei sind im jeweiligen Walzenpaket, das auch als Walzenanordnung oder Walzengruppe bezeichnet werden kann, die Einzugswalzen bezüglich des Gutflusses hintereinander angeordnet, so dass das Erntegut innerhalb des Einzugs nacheinander durch die einzelnen Einzugswalzen gefördert bzw. angetrieben wird. Jede der Einzugswalzen ist drehbar gelagert, wobei eine Drehachse der jeweiligen Einzugswalze bezüglich des eingebauten Zustands in aller Regel parallel zu einer Querachse der Landmaschine verläuft. Im Betriebszustand drehen alle oberen Einzugswalzen gleichsinnig und alle unteren Einzugswalzen drehen gleichsinnig, allerdings entgegengesetzt zu den oberen Einzugswalzen. Zwischen den beiden Walzenpaketen ist ein Einzugskanal gebildet, durch welchen das Erntegut hindurch geführt wird.

Der Einzugsrahmen ist wenigstens indirekt mit dem Fahrzeugrahmen verbunden, wobei "indirekt verbunden" hier und im Folgenden eine Verbindung über wenigstens ein zwischengeordnetes Element bezeichnet. Dabei ist der Einzugsrahmen gegenüber dem Fahrzeugrahmen zwischen einer Absenkposition und einer Hubposition verstellbar. Zur Verstellung des Einzugsrahmens und somit des Einzugs insgesamt ist selbstverständlich wenigstens ein Aktor vorgesehen, so dass bspw. ein Fahrer die Verstellung aus der Fahrerkabine heraus einleiten kann. Die Absenkposition entspricht normalerweise der Position, in welcher Erntegut aufgenommen und durch den Einzug weitertransportiert wird, während die Hubposition bspw. während eines Wendemanövers in einem Vorgewende eingenommen werden kann, wenn aktuell kein Erntegut aufgenommen werden kann oder soll. Die Verstellbarkeit kann insbesondere durch ein Schwenken des Einzugsrahmens gegenüber dem Fahrzeugrahmen realisiert werden, wobei eine entsprechende Einzug-Schwenkachse parallel zur Querachse verläuft. Soweit eine nachgeordnete Häckselvorrichtung eine drehbare Häckseltrommel aufweist, kann die Einzug-Schwenkachse mit der Drehachse der Häckseltrommel zusammenfallen. Insbesondere kann der Einzugsrahmen starr mit einem Häckselaggregat verbunden sein, welches die Häckselvorrichtung aufweist. Dieses Häckselaggregat kann dann verstellbar, bevorzugt schwenkbar, mit dem Fahrzeugrahmen verbunden sein.

Des Weiteren ist wenigstens ein Walzenpaket gegenüber dem Einzugsrahmen verstellbar. Normalerweise handelt es sich hierbei um das obere Walzenpaket, während das untere Walzenpaket stationär bezüglich des Einzugsrahmens gehalten wird. Die Erfindung ist allerdings nicht hierauf beschränkt. Das entsprechende Walzenpaket gilt in diesem Zusammenhang als verstellbar gegenüber dem Einzugsrahmen, wenn die Drehachse wenigstens einer Einzugswalze des Walzenpakets gegenüber dem Einzugsrahmen verstellbar ist. Normalerweise sind die Drehachsen aller Einzugswalzen des entsprechenden Walzenpakets verstellbar, typischerweise die der oberen Einzugswalzen. Zur Realisierung der Verstellbarkeit können unterschiedliche Systeme genutzt werden. Der Einzugsrahmen kann Führungen, insbesondere Führungskulissen, aufweisen, in welchen die Achsen der jeweiligen Einzugswalzen geführt sind. Alternativ können die Drehachsen beiderseits der Einzugswalzen an Schwingen gelagert sein, die gegenüber dem Einzugsrahmen beweglich gelagert sind.

Beide Walzenpakete sind durch wenigstens einen am Fahrzeugrahmen angeordneten Antrieb antreibbar. Der wenigstens eine Antrieb ist am Fahrzeugrahmen angeordnet und mit diesem wenigstens indirekt verbunden. Entsprechend folgt der Antrieb weder den Verstellbewegungen des Einzugsrahmens noch denen der verstellbaren Walzenpakete. Der wenigstens eine Antrieb ist dabei die Vorrichtung, die die Antriebskraft erzeugt. In vielen Fällen kann der Antrieb auch als Motor oder Aktor bezeichnet werden, es wäre allerdings auch bspw. denkbar, dass der Antrieb eine Mehrzahl von Motoren aufweist, die die Antriebskraft gemeinsam erzeugen, bspw. indem sie auf eine einzige Antriebswelle wirken. Der jeweilige Motor kann bspw. als Verbrennungsmotor, Elektromotor oder Hydraulikmotor ausgebildet sein, wobei letzteres bevorzugt ist. In diesem Fall kann der Antrieb auch als Hydraulikantrieb bezeichnet werden.

Erfindungsgemäß ist der wenigstens eine Antrieb über einen ersten Kraftübertragungsweg, aufweisend eine erste Gelenkwelle, mit dem oberen Walzenpaket verbunden und über einen zum ersten Kraftübertragungsweg mechanisch parallelen zweiten Kraftübertragungsweg, aufweisend eine zweite Gelenkwelle, mit dem unteren Walzenpaket verbunden, wobei beide Gelenkwellen bezüglich einer Querachse seitlich des Einzugs verlaufen und sich bezüglich einer Längsachse vorwärts erstrecken. D.h. es sind zwei Kraftübertragungswege vorgesehen, von denen jeder jeweils einem der Walzenpakete zugeordnet ist. Anders ausgedrückt, jedes Walzenpaket wird über einen eigenen Kraftübertragungsweg angetrieben. Dabei sind der erste Kraftübertragungsweg und der zweite Kraftübertragungsweg mechanisch zueinander parallel, d.h. die Kraftübertragung in den beiden Kraftübertragungswegen erfolgt unabhängig voneinander, dementsprechend gibt es auch keinen Kraftfluss von dem einen Kraftübertragungsweg in den anderen. Der erste Kraftübertragungsweg weist eine erste Gelenkwelle auf und der zweite Kraftübertragungsweg weist eine zweite Gelenkwelle auf. Allgemein weist jede der genannten Gelenkwellen wenigstens ein Gelenk auf, das bspw. als Kardangelenk ausgebildet sein kann und ein Schwenken von Teilen der Gelenkwelle gegeneinander ermöglicht. Die Funktion der Gelenkwellen besteht selbstverständlich darin, die Kraftübertragung zu gewährleisten, wenn der Einzugsrahmen gegenüber dem Fahrzeugrahmen verstellt wird und/oder wenigstens ein Walzenpaket gegenüber dem Einzugsrahmen verstellt wird.

Jede der Gelenkwellen verläuft bezüglich einer Querachse seitlich des Einzugs. Die Querachse ist im zusammengebauten Zustand mit der Fahrzeugquerachse der Landmaschine identisch. Die jeweilige Gelenkwelle verläuft seitlich des Einzugs, d. h. auf einer Seite desselben. Dies ist entweder in Fahrtrichtung die linke Seite oder die rechte Seite des Einzugs. Normalerweise verläuft sie seitlich außerhalb des Einzugsrahmens. Wenngleich die Gelenkwelle seitlich des Einzugs verläuft, schließt dies nicht aus, dass sie bezüglich der Längsachse nach hinten oder vorne über die Position des Einzugs hinausragt. In jedem Fall kann die Gelenkwelle einer Seite des Einzugs zugeordnet werden, sie wechselt also nicht die Seite. Entsprechend erstrecken sich beide Gelenkwellen bezüglich der Längsachse nach vorne, welche im zusammengebauten Zustand mit der Fahrzeuglängsachse der Landmaschine identisch ist. Dass sich die Gelenkwellen bezüglich der Längsachse nach vorne erstrecken, bedeutet allgemein, dass ihre Verlaufsrichtung wenigstens eine Komponente in Richtung der Längsachse aufweist. Insbesondere kann ein vorderes Ende der jeweiligen Gelenkwelle gegenüber einem hinteren Ende in Richtung der Längsachse weiter beabstandet sein als senkrecht zur Längsachse. Es handelt sich also nicht um quer verlaufende Gelenkwellen. Teile einer Gelenkwelle können parallel zur Längsachse verlaufen, dies gilt allerdings im Allgemeinen nicht für die gesamte Gelenkwelle. Im Normalbetrieb sind allerdings sämtliche Teile der Gelenkwelle normalerweise um maximal 45° gegenüber der Längsachse geneigt. Die aktuelle Neigung hängt dabei selbstverständlich auch von der aktuellen Stellung des Einzugs und/oder der Walzenpakete gegenüber dem Fahrzeugrahmen ab.

Bei der erfindungsgemäßen Einzugsanordnung erfolgt also eine parallele Kraftübertragung über zwei Wege, wobei jeweils eine seitlich des Einzugs nach vorne verlaufende Gelenkwelle zur Kraftübertragung genutzt wird. Es kann somit zum einen auf eine Kraftübertragung von einem Walzenpaket zum anderen Walzenpaket verzichtet werden, welche im Stand der Technik bspw. über eine sich aufwärts erstreckende Welle, ein Winkelgetriebe sowie eine in Querrichtung durch den Einzug hindurch verlaufende Gelenkwelle erfolgt. Während im Stand der Technik der Kraftfluss zum oberen Walzenpaket gewissermaßen auf dem Umweg über die untere Walzenpaket geführt wird, verläuft der Kraftfluss bei der erfindungsgemäßen Lösung unmittelbar vom wenigstens einen Antrieb zum oberen Walzenpaket. Das Problem des Höhen- und Längenausgleichs beim Verstellen des Einzugsrahmens sowie des wenigstens einen Walzenpakets gegenüber dem Einzugsrahmen kann daher auch in jedem Kraftübertragungsweg isoliert gelöst werden. Dies geschieht wenigstens teilweise, bevorzugt ausschließlich, durch die dem jeweiligen Kraftübertragungsweg zugehörige Gelenkwelle. Ein wesentlicher Vorteil der vorwärts verlaufenden Gelenkwellen liegt darin, dass ihre Länge nicht wie bei einer quer verlaufenden Gelenkwelle durch die Breite des Einzugs beschränkt ist. Bei einer insgesamt längeren Gelenkwelle wirken sich Positionsveränderungen anteilig weniger aus als bei einer kürzeren Gelenkwelle. D.h. der entsprechende Ausgleich ist einfacher und benötigt im Allgemeinen keine Spezialteile, wie nachfolgend noch ausgeführt wird. Zudem lässt sich bei längeren Gelenkwellen eine Konfiguration realisieren, bei der unabhängig von der Position des Einzugsrahmens und der Walzenpakete wenigstens näherungsweise ein Gleichlauf der Einzugswalzen gewährleistet werden kann. Die bei einer quer verlaufenden Gelenkwelle auftretenden seitlichen Schiebekräfte sind bei einer vorwärts verlaufenden Gelenkwelle nicht vorhanden oder vernachlässigbar. Außerdem ermöglicht der Verlauf der Gelenkwellen seitlich des Einzugs eine bessere Zugänglichkeit bei der Montage und insbesondere bei der Wartung.

Es ist im Rahmen der Erfindung möglich, dass die beiden Gelenkwellen auf unterschiedlichen Seiten des Einzugs verlaufen, also ein Gelenkwelle links und die andere Gelenkwelle rechts. Bevorzugt verlaufen jedoch beide Gelenkwellen bezüglich der Querachse auf einer ersten Seite des Einzugs. Die erste Seite kann insbesondere die in Fahrtrichtung gesehen rechte Seite sein. Dabei verlaufen die Gelenkwellen bevorzugt bezüglich der Hochachse übereinander, was die Möglichkeit einschließt, dass die Gelenkwellen außerdem bezüglich der Querachse seitlich versetzt sind.

Es ist denkbar, dass jeder Kraftübertragungsweg an einen eigenen Antrieb gekoppelt ist, z.B. an einen diesem Kraftübertragungsweg zugeordneten eigenen Hydraulikmotor oder anderen Motor. Dies kann allerdings einen synchronen Betrieb der beiden Walzenpakete erschweren, welcher für einen störungsfreien Transport des Ernteguts durch den Einzug zumindest wünschenswert, ggf. auch unabdingbar, ist. Es müsste eine Synchronisierung der beiden Motoren vorgenommen werden, die technisch möglich, aber u.U. aufwändig ist. Dieses Problem wird in einer bevorzugten Ausgestaltung dadurch vermieden, dass ein Antrieb über ein Verteilergetriebe mit beiden Kraftübertragungswegen verbunden ist. Das Verteilergetriebe teilt die Antriebskraft des Antriebs auf beide Kraftübertragungswege auf. Soweit das Verteilergetriebe schlupffrei arbeitet, ist hierdurch automatisch eine Synchronisierung der Walzenpaketen gegeben. Das Verteilergetriebe kann nahe dem Antrieb, welcher durch einen einzelnen Motor gebildet sein kann, angeordnet sein. Insbesondere kann es am Fahrzeugrahmen angeordnet sein. Die beiden Gelenkwellen können direkt an das Verteilergetriebe gekoppelt sein.

Es ist im Stand der Technik bekannt, Landmaschinen wie Feldhäcksler mit einem auswechselbaren Vorsatz zu kombinieren, welcher hinsichtlich des Erntegutflusses dem Einzug vorgeordnet ist. Ein derartiger Vorsatz, bspw. ein Direktschneidwerk, eine Pick-up, einen Maisvorsatz, ein Getreideschneidwerk oder dergleichen, wird an den Einzugsrahmen angekoppelt. Die Kopplung an die Landmaschine ist zum einen statisch-mechanischer Art, zum anderen kann aber auch eine Kopplung zur Energie- bzw. Kraftübertragung in mechanischer, elektrischer, pneumatischer und/oder hydraulischer Form hergestellt werden. Die Kraftübertragung zu den beweglichen Teilen des Vorsatzes erfolgt oftmals über eine Antriebswelle, die über eine Klauenkupplung mit dem Vorsatz verbunden wird. Eine vorteilhafte Ausgestaltungen sieht vor, dass eine Vorsatz-Antriebswelle, welche zur Kraftübertragung auf einen an den Einzugsrahmen ankoppelbaren Vorsatz ausgebildet ist, bezüglich der Querachse auf der zweiten Seite des Einzugs verläuft. D.h., vorteilhaft verläuft die Vorsatz-Antriebswelle auf einer Seite (normalerweise der linken Seite) des Einzugs, die der Seite (normalerweise der rechten Seite) gegenüberliegt, auf welcher die Gelenkwellen verlaufen, über welche die Walzenpakete angetrieben werden. Wenngleich dies technisch nicht ausgeschlossen ist, werden die Vorsatz-Antriebswelle und die o.g. Gelenkwellen normalerweise nicht durch den gleichen Motor angetrieben. Gemäß einer typischen Ausführungsform ist ein erster Motor auf der ersten Seite (normalerweise der rechten Seite) für den Antrieb der Gelenkwellen vorgesehen, während ein zweiter Motor auf der zweiten Seite (normalerweise der linken Seite) zum Antrieb der Vorsatz-Antriebswelle vorgesehen ist. Bei beiden Motoren kann es sich um Hydraulikmotoren handeln.

Vorteilhaft sind die Einzugswalzen wenigstens eines Walzenpakets über ein Walzengetriebe kraftübertragend aneinander gekoppelt. Durch das entsprechende Walzengetriebe laufen die Einzugswalzen der Walzenpakete immer in einem festen Drehzahlverhältnis. Das Drehzahlverhältnis ist normalerweise so abgestimmt, dass sie mit der gleichen Tangentialgeschwindigkeit laufen, so dass das Erntegut innerhalb des Einzugs mit konstanter Geschwindigkeit gefördert wird. Die seitens der jeweiligen Gelenkwelle eingespeiste Antriebskraft kann bspw. auf eine der Einzugswalzen übertragen werden, welche dann über das Walzengetriebe die anderen Einzugswalzen antreibt. Das jeweilige Walzengetriebe kann bevorzugt als Stirnradgetriebe ausgebildet sein oder ein Stirnradgetriebe aufweisen, bei welchem jeweils ein Stirnrad koaxial zu einer Einzugswalze angeordnet ist und jeweils ein weiteres Stirnrad zwischen zwei derartigen Sternrädern zwischengeordnet ist, wodurch ein gleichsinniger Antrieb der Einzugswalzen gewährleistet wird. Im Falle von drei Einzugswalzen weist das Walzengetriebe somit fünf Stirnräder auf.

Wenigstens ein Walzengetriebe ist normalerweise wenigstens indirekt über ein Winkelgetriebe an eine Gelenkwelle gekoppelt. Das entsprechende Winkelgetriebe, welches bevorzugt als Kegelradgetriebe ausgebildet ist, sorgt für eine Umlenkung der Drehbewegung zwischen der Gelenkwelle und dem Walzengetriebe. Normalerweise erfolgt eine Umlenkung um 90°. Das Winkelgetriebe kann unmittelbar an das Walzengetriebe gekoppelt sein, es ist aber auch eine indirekte Kopplung möglich. Bspw. kann das Winkelgetriebe an eine der Einzugswalzen gekoppelt sein, womit das Walzengetriebe indirekt über diese Einzugswalzen an das Winkelgetriebe gekoppelt ist.

Bevorzugt ist ein dem unteren Walzenpaket zugeordnetes unteres Walzengetriebe an die zweite Gelenkwelle gekoppelt und auf der ersten Seite des Einzugs angeordnet. Neben der Ankopplung der unteren Einzugswalzen aneinander kann das untere Walzengetriebe auch eine Umlenkung der durch die zweite Gelenkwelle eingekoppelten Drehbewegung bewirken. Hierzu kann das obere Walzengetriebe ein Winkelgetriebe aufweisen. Zumindest kann ein solches Winkelgetriebe im gleichen Gehäuse aufgenommen sein wie das obere Walzengetriebe.

Es ist möglich, dass ein oberes Walzengetriebe, welches dem oberen Walzenpaket zugeordnet ist, ebenfalls auf der ersten Seite angeordnet ist. Dies bedeutet, dass die Krafteinkopplung seitens der zweiten Gelenkwelle und die Kraftübertragung auf die oberen Einzugswalzen auf der gleichen Seite erfolgen können und somit hierfür nur eine Getriebeeinheit nötig ist, die in einem einzigen Getriebegehäuse untergebracht werden kann. Allerdings bedeutet dies, dass das obere Walzengetriebe auf der gleichen Seite wie das untere Walzengetriebe angeordnet ist, so dass zwischen diesen beiden Getrieben bzw. den ihnen zugeordneten Getriebegehäusen nur ein vergleichsweise geringer Zwischenraum verbleibt, in welchem sich Erntegut ansammeln kann. Diese Problematik kann verhindert werden, wenn gemäß einer bevorzugten Ausgestaltung das obere Walzengetriebe über eine obere Einzugswalze an die erste Gelenkwelle gekoppelt und auf der zweiten Seite des Einzugs angeordnet ist. D.h., der Kraftfluss verläuft von der ersten Gelenkwelle, normalerweise indirekt über ein Winkelgetriebe, zunächst zu einer der oberen Einzugswalzen und von dieser zum oberen Walzengetriebe. Entsprechend verläuft der Kraftfluss in Querrichtung durch den Einzugsrahmen, allerdings nicht über eine Gelenkwelle wie im Stand der Technik, sondern über eine der ohnehin vorhandenen oberen Einzugswalzen.

Insbesondere kann die Kraftübertragung über eine in Fahrtrichtung vorderste obere Einzugswalze erfolgen.

Unter Umständen können eine oder beide Gelenkwellen als Einfach-Gelenkwelle ausgebildet sein. Bei vielen Ausführungsformen ist dies allerdings unzureichend oder nicht praktikabel. Entsprechend ist vorteilhaft wenigstens eine Gelenkwelle als Doppel-Gelenkwelle ausgebildet, mit einer wenigstens indirekt an einen Antrieb gekoppelten Abtriebswelle, einer hiermit gelenkig verbundenen Zwischenwelle sowie einer mit der Zwischenwelle gelenkig verbundenen, wenigstens indirekt an eine Walzenpaket gekoppelten Antriebswelle. Die jeweilige gelenkige Verbindung ist dabei normalerweise durch ein Kardangelenk oder Kreuzgelenk gegeben, allerdings wäre auch ein anderer Gelenktyp denkbar, bspw. ein homokinetisches Gelenk. Jede der genannten Wellen, also Abtriebswelle, Zwischenwelle und Antriebswelle, kann ein- oder mehrteilig ausgebildet sein. Im Falle einer mehrteiligen Ausbildung sind die einzelnen Teile allerdings drehfest miteinander verbunden, so dass eine Übertragung der Drehbewegung möglich ist. Die einzelnen Teile können auch starr miteinander verbunden sein.

In aller Regel bedingt die Verstellung des Einzugsrahmens, ebenso wie die Verstellung des oberen Walzenpakets, nicht nur ein Schwenken der einzelnen Wellenteile gegeneinander, sondern auch einen Längenausgleich, der über eine Längenänderung der Zwischenwelle realisiert wird. Entsprechend ist normalerweise wenigstens eine Zwischenwelle teleskopierend ausgebildet, mit zwei Wellenhälften, die miteinander verschieblich aber verdrehsicher verbunden sind. In der Regel gilt dies für die Zwischenwellen beider Gelenkwellen. Aufgrund des wenigstens anteiligen Verlaufs in Richtung der Längsachse können die Gelenkwellen insgesamt und die Zwischenwellen insbesondere länger ausgebildet sein als z.B. bei einer quer durch den Einzugsrahmen verlaufenden Gelenkwelle im Stand der Technik. Der maximale Verschiebungsweg ist daher im Vergleich zur Länge der Wellenhälften kleiner. Er beträgt typischerweise zwischen 10% und 60% der Länge der kürzeren Wellenhälfte. Die Bezeichnung "kürzere Wellenhälfte" ist nicht dahingehend auszulegen, dass die Wellenhälften unterschiedlich lang sein müssen. Bei gleichlangen Wellenhälften kann jede der beiden als "kürzere" Wellenhälfte angesehen werden. Da der Verschiebungsweg nur 10% bis 60% der genannten Länge beträgt, weisen die Wellenhälften auch bei maximaler Auszugslänge noch eine erhebliche Überlappung von 40% bis 90% auf, was dazu führt, dass die Verdrehsicherheit mit einem vergleichsweise einfachen, kostengünstigen Profil gewährleistet werden kann. Dementsprechend können die Wellenhälften wenigstens einer Zwischenwelle durch ein Sternprofil miteinander eingreifen. Derartige Sternprofile werden bei Gelenkwellen standardmäßig zum Längenausgleich eingesetzt. Hingegen muss bei einer kurzen Gelenkwelle, bei welcher die Wellenhälften bei voller Auszugslänge nur eine geringe Überlappung aufweisen, ein Spezialprofil eingesetzt werden, z.B. ein Vielzahnprofil, welches teurer ist und außerdem zu höherer Reibung beim Verschieben der Wellenhälften führt.

Eine Ausgestaltung sieht vor, dass ein Winkelgetriebe, über welches ein Walzenpaket an eine Gelenkwelle gekoppelt ist, gegenüber dem Einzugsrahmen schwenkbar gelagert und durch eine Koppelstange mit dem Fahrzeugrahmen verbunden ist, welche mit dem Winkelgetriebe und dem Fahrzugrahmen schwenkbar verbunden ist. Insbesondere kann sich dies auf die erste Gelenkwelle und das obere Winkelgetriebe beziehen. Die Koppelstange ist dabei starr ausgebildet, d.h. sie erfährt im Normalbetrieb allenfalls eine vernachlässigbare Verformung. Sie ist um eine erste Stangen-Schwenkachse schwenkbar mit dem Fahrzeugrahmen verbunden und um eine zweite Stangen-Schwenkachse schwenkbar mit dem oberen Winkelgetriebe. Das Winkelgetriebe ist wiederum um eine Getriebe-Schwenkachse schwenkbar mit dem Einzugsrahmen verbunden. Die drei genannte Schwenkachsen sind dabei in aller Regel parallel zur Querachse. Wenn die Getriebe-Schwenkachse ihrerseits um eine Schwenkachse (z.B. die Einzug-Schwenkachse) schwenkt, die mit den anderen drei Schwenkachsen ein Parallelogramm bildet, ist hierdurch eine stets gleichbleibende Orientierung des Winkelgetriebes garantiert. Somit bleibt auch die in das Winkelgetriebe eingekoppelte Antriebswelle der Gelenkwelle immer gleich ausgerichtet. Auf diese Weise kann die Gelenkwelle in einer Z-Anordnung gehalten werden, in der ihre Abtriebswelle stets parallel zur Antriebswelle ausgerichtet ist, so dass sich keinerlei Gleichlaufschwankungen ergeben. Normalerweise entspricht die Bewegung der Getriebe-Schwenkachse nicht exakt einer Schwenkbewegung um eine Schwenkachse, die mit den anderen Schwenkachsen ein derartiges Parallelogramm bildet. Allerdings lässt sich auch bei einer hieran angenäherten Bewegung eine hohe Gleichlaufstabilität erreichen. Die hier beschriebene parallelogrammartige Führung wird unabhängig vom Vorhandensein zweier mechanisch paralleler Kraftübertragungswege als vorteilhaft gesehen, um eine wenigstens näherungsweise Z-Anordnung einer Doppelgelenkwelle aufrechtzuerhalten.

Insbesondere bei der o.g. Ausgestaltung kann vorteilhaft erreicht werden, dass die Verlaufsrichtungen einer Abtriebswelle und einer Antriebswelle einer Gelenkwelle unabhängig von der Position des Einzugsrahmens und der Position des an diese Gelenkwelle gekoppelten Walzenpakets nach Art einer Z-Anordnung um weniger als 10° voneinander abweichen. Insbesondere kann sich dies auf die erste Gelenkwelle und das obere Walzenpaket beziehen. Bei einer Z-Anordnung im strengen Sinn sind die Verlaufsrichtungen identisch bzw. parallel, d.h. die Abtriebswelle und die Antriebswelle verlaufen parallel zueinander. Durch ein exakte Z-Anordnung wird auf Seiten der Abtriebswelle ein exakter Gleichlauf erreicht, d.h. die Abtriebswelle dreht sich mit konstanter Winkelgeschwindigkeit, sofern die Antriebswelle dies tut. Allerdings ist auch bei einer geringfügigen Abweichung von der exakten Z-Anordnung noch ein zufriedenstellender Gleichlauf auf Seiten der Antriebswelle - und somit auf Seiten des oberen Walzenpakets - gegeben. Die genannten Verlaufsrichtungen können bevorzugt um weniger als 7° oder weniger als 5° voneinander abweichen.

Eine Ausführungsform sieht vor, dass wenigstens eine Abtriebswelle entlang der Längsachse durch den Fahrzeugrahmen hindurchgeführt ist. Die entsprechende Abtriebswelle kann dabei parallel zur Längsachse verlaufen. Es ist allerdings auch eine Abweichung hiervon möglich. In jedem Fall erstreckt sie sich bezüglich der Längsachse von hinten nach vorne. Sie verläuft wenigstens teilweise innerhalb des Fahrzeugrahmens, was einerseits eine platzsparende Lösung darstellt, andererseits aber auch einen mechanischen Schutz der Abtriebswelle gewährleisten kann. Die entsprechende Abtriebswelle kann über ein oder mehrere bezüglich des Fahrzeugrahmens ortsfeste Lager drehbar gelagert sein. Selbstverständlich können die Abtriebswellen beider Gelenkwellen in der beschriebenen Weise durch den Fahrzeugrahmen hindurchgeführt sein.

Es ist bevorzugt, dass in der Absenkposition des Einzugsrahmens ein erster Winkel zwischen den Verlaufsrichtungen einer Abtriebswelle und einer Zwischenwelle einer Gelenkwelle und ein zweiter Winkel zwischen den Verlaufsrichtungen der Zwischenwelle und einer Antriebswelle dieser Gelenkwelle nach Art einer W-Anordnung um weniger als 5° voneinander abweichen. Insbesondere kann dies für die zweite Gelenkwelle gelten. Bei einer exakten W-Anordnung sind der erste und der zweite Winkel identisch, d.h. die Verlaufsrichtungen der Antriebswelle und der Abtriebswelle sind um jeweils gleiche Winkel gegenüber der Verlaufsrichtung der Zwischenwelle geneigt. Diese ideale Konfiguration lässt sich nicht immer realisieren, allerdings lässt sich auch bei einer geringfügigen Abweichung des ersten und zweiten Winkels noch ein zufriedenstellender Gleichlauf auf Seiten der Antriebswelle - und somit auf Seiten des unteren Walzenpakets - erreichen. Der erste und zweite Winkel können bevorzugt um weniger als 3° oder weniger als 2° voneinander abweichen. In jedem Fall liegen die Verlaufsrichtungen der Antriebswelle und der Abtriebswelle normalerweise in einer Ebene, so dass sie sich in einem Punkt schneiden. Unter Umständen ist es allerdings für einen ausreichenden Gleichlauf akzeptabel, wenn die Verlaufsrichtungen nicht exakt in einer Ebene liegen, sondern nur näherungsweise.

Weiterhin ist die Einzugsanordnung bevorzugt derart ausgelegt, dass in der Hubposition des Einzugsrahmens die Verlaufsrichtungen der Abtriebswelle und der Antriebswelle einer Gelenkwelle nach Art einer Z-Anordnung um weniger als 10° voneinander abweichen. Dies gilt bevorzugt für die gleiche Gelenkwelle, die in der Absenkposition nach Art einer W-Anordnung positioniert ist. Weiterhin gilt es bevorzugt für die zweite Gelenkwelle. Bei einer Z-Anordnung im strengen Sinn sind die Verlaufsrichtungen identisch bzw. parallel, d.h. die Abtriebswelle und die Antriebswelle verlaufen parallel zueinander. Auch wenn sich diese ideale Konfiguration nicht immer realisieren lässt, kann auch bei einer geringfügigen Abweichung noch ein zufriedenstellender Gleichlauf auf Seiten der Antriebswelle - und somit auf Seiten des hieran gekoppelten Walzenpakets - erreicht werden. Die genannten Verlaufsrichtungen können bevorzugt um weniger als 7° oder weniger als 5° voneinander abweichen. Beim Verstellen des Einzugsrahmens zwischen der Absenkposition oder Hubposition können sich übergangsweise Anordnungen ergeben, die sowohl von einer W-Anordnung als auch von einer Z-Anordnung deutlich abweichen. Der Verstellvorgang zwischen Absenkposition und Hubposition erfolgt jedoch im Betrieb während eines kurzen Zeitraums, so dass diese Zwischenpositionen hinsichtlich des Gleichlaufs weniger relevant sind.

Durch die Erfindung wird auch eine Einzugsanordnung für eine Landmaschine zur Verfügung gestellt, die einen Fahrzeugrahmen aufweist sowie einen Einzug mit einem Einzugsrahmen, an welchem ein oberes Walzenpaket, mit einer Mehrzahl von oberen Einzugswalzen, sowie ein unteres Walzenpaket, mit einer Mehrzahl von unteren Einzugswalzen, gelagert sind, wobei der Einzugsrahmen gegenüber dem Fahrzeugrahmen zwischen einer Absenkposition und einer Hubposition verstellbar ist und wenigstens ein Walzenpaket gegenüber dem Einzugsrahmen verstellbar ist, wobei beide Walzenpakete durch wenigstens einen am Fahrzeugrahmen angeordneten Antrieb antreibbar sind, wobei wenigstens ein Walzenpaket über wenigstens eine Gelenkwelle an den wenigstens einen Antrieb gekoppelt ist, welche Gelenkwelle als Doppel-Gelenkwelle ausgebildet ist, mit einer wenigstens indirekt an einen Antrieb gekoppelten Abtriebswelle, einer hiermit gelenkig verbundenen Zwischenwelle sowie einer mit der Zwischenwelle gelenkig verbundenen Antriebswelle, wobei das wenigstens eine Walzenpaket über ein Winkelgetriebe an die Gelenkwelle gekoppelt ist, welches gegenüber dem Einzugsrahmen schwenkbar gelagert und durch eine Koppelstange mit dem Fahrzeugrahmen verbunden ist, welche mit dem Winkelgetriebe und dem Fahrzugrahmen schwenkbar verbunden ist.

Vorteilhaft kann auch hierbei der wenigstens eine Antrieb über einen ersten Kraftübertragungsweg, aufweisend eine erste Gelenkwelle, mit dem oberen Walzenpaket verbunden sein und über einen zum ersten Kraftübertragungsweg mechanisch parallelen zweiten Kraftübertragungsweg, aufweisend eine zweite Gelenkwelle, mit dem unteren Walzenpaket verbunden sein, wobei beide Gelenkwellen bezüglich einer Querachse seitlich des Einzugs verlaufen und sich bezüglich einer Längsachse vorwärts erstrecken. Zusätzlich oder alternativ mögliche Ausgestaltungen dieser Einzugsanordnung entsprechen den oben beschriebenen vorteilhaften Ausgestaltungen.

Durch die Erfindung wird außerdem eine Landmaschine bereitgestellt, aufweisend einen Fahrzeugrahmen sowie einen Einzug mit einem Einzugsrahmen, an welchem ein oberes Walzenpaket, mit einer Mehrzahl von oberen Einzugswalzen, sowie ein unteres Walzenpaket, mit einer Mehrzahl von unteren Einzugswalzen, gelagert sind, wobei der Einzugsrahmen gegenüber dem Fahrzeugrahmen zwischen einer Absenkposition und einer Hubposition verstellbar ist und wenigstens eine Walzenpaket gegenüber dem Einzugsrahmen verstellbar ist, wobei beide Walzenpakete durch wenigstens einen am Fahrzeugrahmen angeordneten Antrieb antreibbar sind. Bei der Landmaschine kann es sich insbesondere um einen Feldhäcksler handeln.

Erfindungsgemäß ist der wenigstens eine Antrieb über einen ersten Kraftübertragungsweg, aufweisend eine erste Gelenkwelle, mit dem oberen Walzenpaket verbunden und ist über einen zum ersten Kraftübertragungsweg mechanisch parallelen zweiten Kraftübertragungsweg, aufweisend eine zweite Gelenkwelle, mit dem unteren Walzenpaket verbunden, wobei beide Gelenkwellen bezüglich einer Querachse seitlich des Einzugs verlaufen und sich bezüglich einer Längsachse vorwärts erstrecken.

Die genannten Begriffe wurden bereits mit Bezug auf die erfindungsgemäße Einzugsanordnung erläutert und werden daher nicht nochmals erklärt. Bevorzugte Ausgestaltungen der erfindungsgemäßen Landmaschine entsprechen denen der erfindungsgemäßen Einzugsanordnung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine erste perspektivische Darstellung einer erfindungsgemäßen Einzugsanordnung in einer ersten Position;
- Fig. 2: eine zweite perspektivische Darstellung der Einzugsanordnung aus Fig. 1 in der ersten Position;
- Fig. 3: eine teilweise Schnittdarstellung einer Seitenansicht der Einzugsanordnung aus Fig. 1 in der ersten Position;
- Fig. 4: eine teilweise Schnittdarstellung einer Seitenansicht der Einzugsanordnung aus Fig. 1 in einer zweiten Position; sowie
- Fig. 5: eine teilweise Schnittdarstellung einer Seitenansicht der Einzugsanordnung aus Fig. 1 in einer dritten Position.

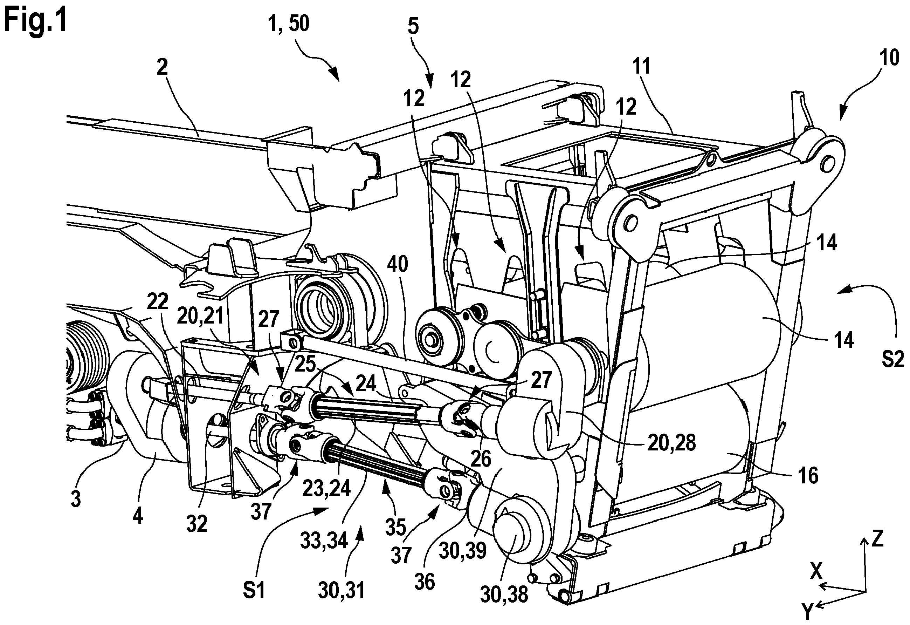

Fig. 1 - 5 zeigen eine erfindungsgemäß Einzugsanordnung 1, die einen Teil einer Landmaschine 50, in diesem Fall eines Feldhäckslers, bildet. Der Übersichtlichkeit halber sind diverse Teile der Landmaschine 50 sowie der Einzugsanordnung 1, welche nicht zum Verständnis der Erfindung beitragen, weggelassen. In den Figuren sind jeweils die Längsachse X, die Querachse Y sowie die Hochachse Z der Landmaschine 50 eingezeichnet.

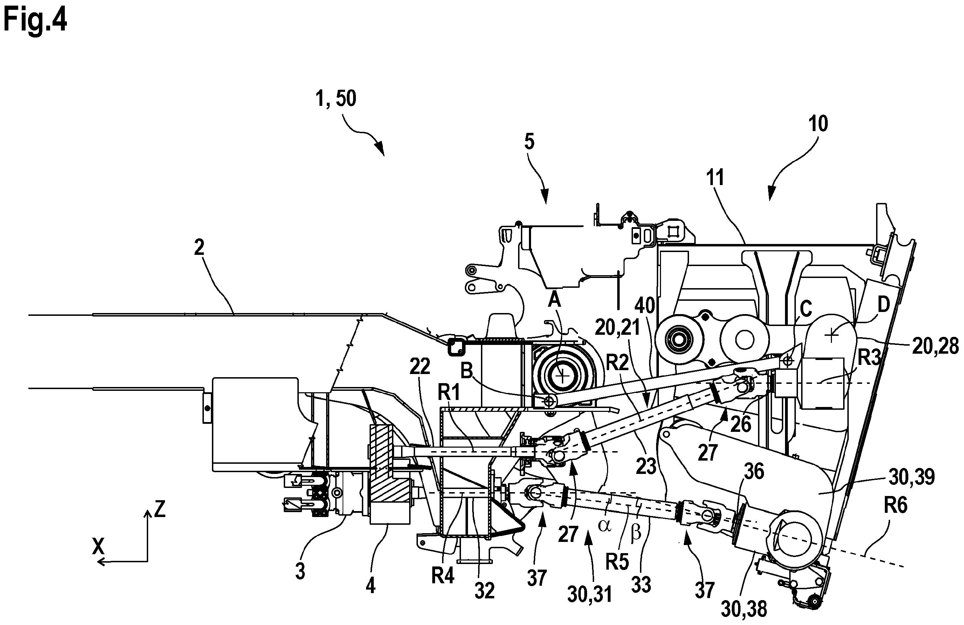

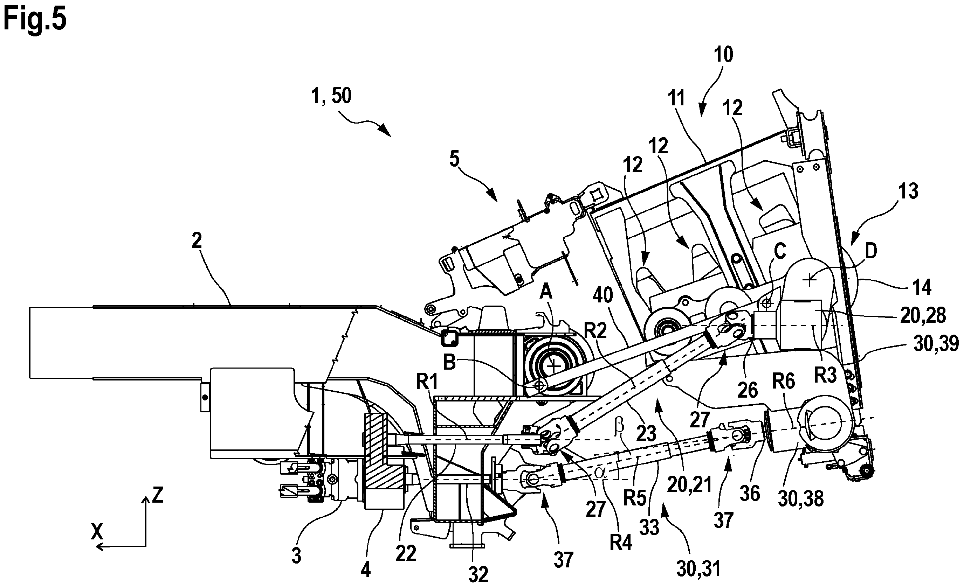

Erkennbar sind Teile eines Fahrzeugrahmens 2, welcher der Landmaschine 50 insgesamt strukturelle Stabilität verleiht. Mit diesem Fahrzeugrahmen 2 ist ein Einzugsrahmen 11 eines Einzugs 10 schwenkbar verbunden, wobei die Verbindung indirekt über ein Häckselaggregat 5 gegeben ist, mit welchem der Einzugsrahmen 11 starr verbunden ist. Dieses Häckselaggregat 5 ist wiederum schwenkbar mit dem Fahrzeugrahmen 2 verbunden. Somit ist der Einzugsrahmen 11 durch Schwenken um eine Einzugs-Schwenkachse A, die parallel zur Querachse Y verläuft, zwischen einer in Fig. 1 bis 3 dargestellten Absenkposition und einer in Fig. 4 und 5 dargestellten Hubposition verstellbar.

An dem Einzugsrahmen 11 sind ein oberes Walzenpaket 13, mit einer Mehrzahl von oberen Einzugswalzen 14, sowie ein unteres Walzenpaket 15, mit einer Mehrzahl von unteren Einzugswalzen 16, drehbar gelagert, wobei die Drehachsen (ohne Bezugszeichen) jeder der Einzugswalzen 14, 16 parallel zur Querachse Y verlaufen. Im Betriebszustand drehen alle oberen Einzugswalzen 14 gleichsinnig und alle unteren Einzugswalzen 16 drehen gleichsinnig, allerdings entgegengesetzt zu den oberen Einzugswalzen. Zwischen den beiden Walzenpaketen 13, 15 ist ein Einzugskanal gebildet, durch welchen das Erntegut hindurch geführt wird, welches zuvor mit einem (nicht dargestellten) Vorsatz vom Feld aufgenommen wurde. Während die Drehachsen der unteren Einzugswalzen 16 positionsfest bezüglich des Einzugsrahmens 11 gelagert sind, können die Drehachsen der oberen Einzugswalzen 14 gegenüber dem Einzugsrahmen 11 verstellt werden, d.h. das obere Walzenpaket 13 ist gegenüber dem Einzugsrahmen 11 verstellbar. Hierdurch kann die Einzugsweite, also der Raum zwischen den beiden Walzenpaketen 13, 15 an die momentan aufzunehmende Erntegutmenge angepasst werden. Der Einzugsrahmen 11 weist Führungskulissen 12 auf, in welchen die Drehachsen der oberen Einzugswalzen 14 bei ihrer Verstellbewegung geführt sind.

Bezüglich des Erntegutflusses ist dem Einzug 10 eine in den Figuren nicht sichtbare Häckseltrommel innerhalb des Häckselaggregats 5 nachgeordnet, deren Drehachse mit der Einzug-Schwenkachse A identisch ist. Die Walzenpakete 13, 15 führen das Erntegut der Häckseltrommel zu und können es auch vorpressen. Zu diesem Zweck können die oberen Einzugswalzen 14 in hier nicht näher dargestellter Weise in Richtung auf die unteren Einzugswalzen 16 kraftbeaufschlagt sein.

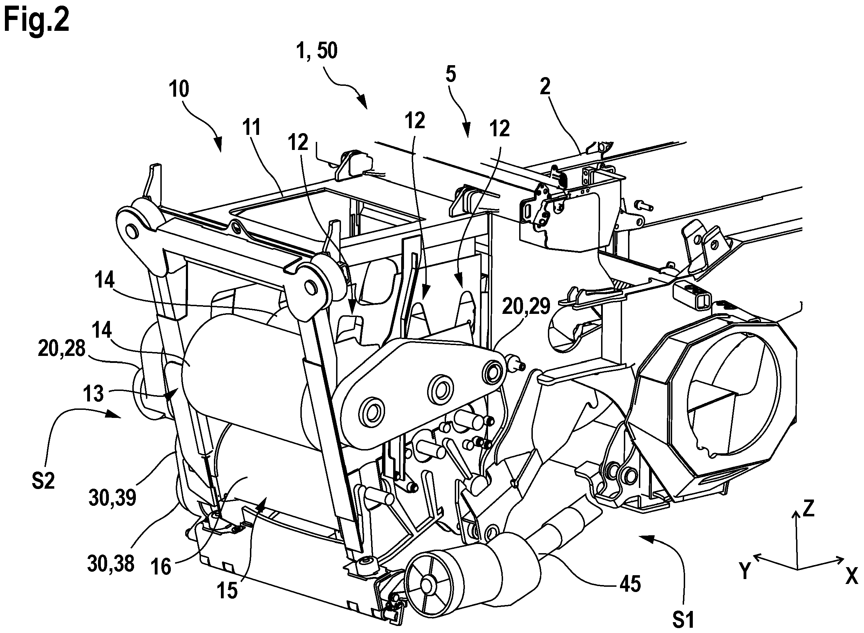

In Fig. 2, in der eine linke Seite S2 des Einzugs 10 erkennbar ist, ist eine Vorsatz-Antriebswelle 45 gezeigt, welche zur Kraftübertragung auf den oben erwähnten Vorsatz dient, wenn dieser an den Einzugsrahmen 11 angekoppelt ist. Die Vorsatz-Antriebswelle 45, die hier nur teilweise dargestellt ist, erstreckt sich bezüglich der Längsachse X vorwärts. Sie wird über einen hier nicht dargestellten Hydraulikmotor angetrieben und ist als Gelenkwelle ausgebildet, um die Positionsveränderungen des Vorsatzes beim Heben und Senken des Einzugsrahmens 11 auszugleichen.

Die beiden Walzenpakete sind ebenfalls antreibbar, wobei die Antriebskraft durch einen mit dem Fahrzeugrahmen 2 verbundenen, als Antrieb 3 dienenden Hydraulikmotor erzeugt wird. Der Antrieb 3 ist an ein Verteilergetriebe 4 gekoppelt, welches die Antriebskraft auf zwei Kraftübertragungswege 20, 30 aufteilt. Ein erster Kraftübertragungsweg 20 führt zum oberen Walzenpaket 13, während ein zweiter Kraftübertragungsweg 30 zum unteren Walzenpaket 15 führt. Als wesentliches Element zur Kraftübertragung weist jeder der Kraftübertragungswege 20, 30 jeweils eine Gelenkwelle 21, 31 auf. Diese ist jeweils als Doppelgelenkwelle ausgebildet, mit einer vom Verteilergetriebe 4 ausgehenden Abtriebswelle 22, 32, einer hiermit über ein Kardangelenk 27, 37 verbundenen Zwischenwelle 23, 33 sowie einer mit der Zwischenwelle 23, 33 über ein weiteres Kardangelenk 27, 37 gelenkig verbundenen Antriebswelle 26, 36. Jede der Zwischenwellen 23, 33 weist jeweils zwei teleskopierend miteinander verbundene Wellenhälften 24, 34 auf. Wie im Weiteren noch erläutert wird, ist der maximale Verschiebungsweg vergleichsweise klein und beträgt in diesem Fall ca. 45% der Länge jeder der Wellenhälften 24, 34 (die in diesem Fall gleich lang sind). Dementsprechend weisen die Wellenhälften 24, 34 auch bei maximaler Auszugslänge noch eine erhebliche Überlappung von 55% auf. Daher kann eine verdrehsichere Verbindung mit einem vergleichsweise einfachen, kostengünstigen Sternprofil 25, 35 gewährleistet werden.

Die Antriebswelle 26 der ersten Gelenkwelle 20 ist an ein oberes Winkelgetriebe 28 gekoppelt, das ebenfalls Teil des ersten Kraftübertragungswegs 20 ist. Es bewirkt eine Umleitung der Drehbewegung um 90° und ist direkt an die vorderste der oberen Einzugswalzen 14 gekoppelt. Über die genannte obere Einzugswalze 14 wird wiederum ein auf der linken Seite S2 angeordnetes oberes Walzengetriebe 29 angetrieben. Dieses ist als Stirnradgetriebe ausgebildet. Es weist insgesamt fünf Stirnräder auf, von denen drei an jeweils einer der oberen Einzugswalzen 14 gekoppelt sind und zwei weitere zur Kraftübertragung zwischengeordnet sind.

Die Antriebswelle 36 der zweiten Gelenkwelle 30 ist an ein unteres Winkelgetriebe 38 gekoppelt, das in einem gemeinsamen Gehäuse mit einem unteren Walzengetriebe 29 angeordnet ist. Das untere Winkelgetriebe 38 dient wiederum der Umlenkung der Drehbewegung und wirkt unmittelbar auf ein Stirnrad des unteren Walzengetriebes 39, welches ebenfalls als Stirnradgetriebe ausgebildet ist und die unteren Einzugswalzen 16 aneinander koppelt. Durch die Anordnung des oberen Walzengetriebes 29 und des unteren Walzengetriebes 39 auf verschiedenen Seiten S1, S2 wird verhindert, dass sich während des Betriebs Erntegut zwischen den Gehäusen der Getriebe ansammeln kann. Grundsätzlich wäre es allerdings auch möglich, das obere Walzengetriebe 29 auf der rechten Seite S1 anzuordnen. Das obere Winkelgetriebe 28 ist gegenüber dem Einzugsrahmen 11 um eine Getriebe-Schwenkachse D drehbar gelagert. Eine Koppelstange 40 ist um eine erste Stangen-Schwenkachse B schwenkbar mit dem Fahrzeugrahmen 2 verbunden und um eine zweite Stangen-Schwenkachse C schwenkbar mit dem oberen Winkelgetriebe 28 verbunden.

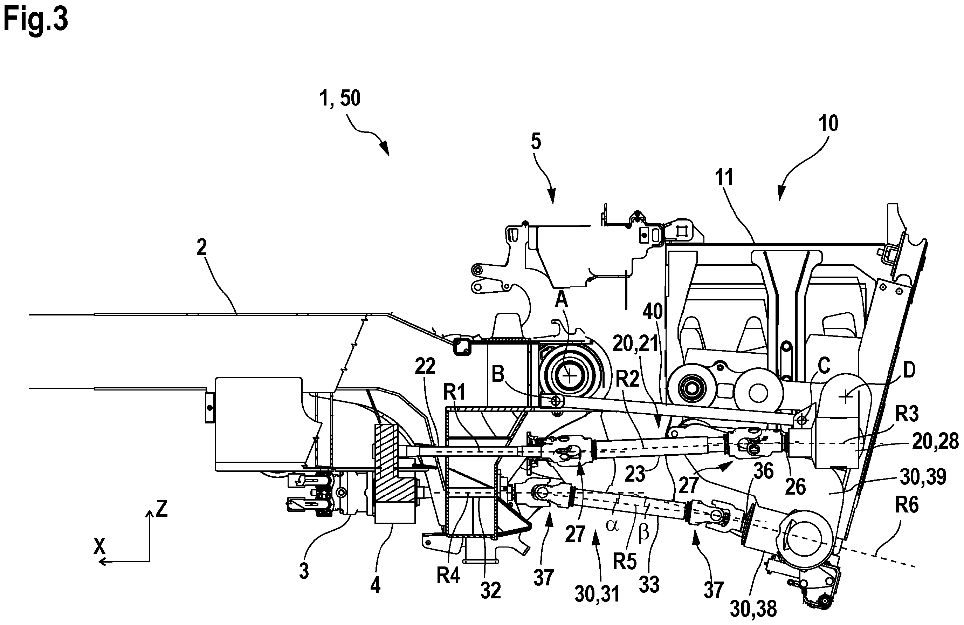

Wie insbesondere in der Seitenansicht in Fig. 3 erkennbar ist, bilden die Einzug-Schwenkachse A, die beiden Stangen-Schwenkachsen B, C sowie die Getriebe-Schwenkachse D eine näherungsweise, wenngleich nicht exakt parallelogrammförmige Anordnung. Dementsprechend wird das obere Winkelgetriebe 28 beim Schwenken des Einzugsrahmens 11 zwischen der in Fig. 1 bis 4 dargestellten Absenkposition und der Hubposition in einer annähernd gleichen Ausrichtung gehalten. Dementsprechend ändert sich der Winkel zwischen der ortsfest durch den Fahrzeugrahmen 2 hindurchgeführten Abtriebswelle 22 und der in das obere Winkelgetriebe 28 einmündenden Antriebswelle 26 bei der Verstellung des Einzugsrahmens 11 nur wenig. Somit verbleibt die erste Gelenkwelle 21 näherungsweise in einer Z-Anordnung, was bedeutet, dass sich eine Verlaufsrichtung R1 der Abtriebswelle 22 und eine Verlaufsrichtung R3 der Antriebswelle 26 um in diesem Fall maximal 1° unterscheiden, wenngleich sich eine Verlaufsrichtung R2 der Zwischenwelle 23 wesentlich ändert. Daher wird bei einer konstanten Winkelgeschwindigkeit der Abtriebswelle 22 auch die Antriebswelle 26 mit näherungsweise konstanter Winkelgeschwindigkeit angetrieben, was somit auch für das obere Winkelgetriebe 28, das obere Walzengetriebe 29 und die oberen Einzugswalzen 14 gilt. Somit werden keine unnötigen Vibrationen im Einzug 10 erzeugt. Wenn statt eines Verstellens des Einzugsrahmens 11 das obere Walzenpaket 13 gegenüber dem Einzugsrahmen 11 verstellt wird, wie in Fig. 4 erkennbar, bewegt sich die Getriebe-Schwenkachse D zwar auf keiner exakten Kreisbahn um die Walzen-Schwenkachse A, allerdings ist über die Führungskulisse 12 eine Bewegung vorgegeben, die wenigstens näherungsweise konzentrisch zur Walzen-Schwenkachse A verläuft. Somit bleibt auch hier die näherungsweise parallelogrammförmige Anordnung der o.g. Schwenkachsen A-D erhalten. Das Gleiche gilt auch, wenn das Anheben des oberen Walzenpakets 13 zusätzlich zum Anheben des Einzugsrahmens 11 erfolgt, wie in Fig. 5 dargestellt.

In der in Fig. 3 und 4 dargestellten Absenkposition des Einzugsrahmens 11 befindet sich die zweite Gelenkwelle 32 in einer W-Anordnung, so dass ein erster Winkel α zwischen einer Verlaufsrichtung R4 der Abtriebswelle 32 und einer Verlaufsrichtung R5 der Zwischenwelle 33 identisch ist mit einem zweiten Winkel β zwischen der Verlaufsrichtung R5 der Zwischenwelle 33 und einer Verlaufsrichtung R6 der Antriebswelle 36. Auch die W-Anordnung garantiert eine konstante Winkelgeschwindigkeit der Antriebswelle 36 ohne Gleichlaufschwankungen. Beim Verstellen in die Hubposition gemäß Fig. 5 verlässt die zweite Gelenkwelle 31 die W-Anordnung und gelangt dafür in eine näherungsweise Z-Anordnung, wobei sich die Verlaufsrichtung R4 der Abtriebswelle 32 nur wenig von der Verlaufsrichtung R6 der Antriebswelle 36 unterscheidet, in diesem Fall um ca. 7°. Die sich hierdurch ergebenden Gleichlaufschwankungen sind vernachlässigbar.

## Patentansprüche

1. Einzugsanordnung (1) für eine Landmaschine (50), aufweisend einen Fahrzeugrahmen (2) sowie einen Einzug (10) mit einem Einzugsrahmen (11), an welchem ein oberes Walzenpaket (13), mit einer Mehrzahl von oberen Einzugswalzen (14), sowie ein unteres Walzenpaket (15), mit einer Mehrzahl von unteren Einzugswalzen (16), gelagert sind, wobei der Einzugsrahmen (11) gegenüber dem Fahrzeugrahmen (2) zwischen einer Absenkposition und einer Hubposition verstellbar ist und wenigstens ein Walzenpaket (13, 15) gegenüber dem Einzugsrahmen (11) verstellbar ist, wobei beide Walzenpakete (13, 15) durch wenigstens einen am Fahrzeugrahmen (2) angeordneten Antrieb (3) antreibbar sind,
**dadurch gekennzeichnet, dass**
der wenigstens eine Antrieb (3) über einen ersten Kraftübertragungsweg (20), aufweisend eine erste Gelenkwelle (21), mit dem oberen Walzenpaket (13) verbunden ist und über einen zum ersten Kraftübertragungsweg (20) mechanisch parallelen zweiten Kraftübertragungsweg (30), aufweisend eine zweite Gelenkwelle (31), mit dem unteren Walzenpaket (15) verbunden ist, wobei beide Gelenkwellen (21, 31) bezüglich einer Querachse (Y) seitlich des Einzugs (10) verlaufen und sich bezüglich einer Längsachse (X) vorwärts erstrecken.

2. Einzugsanordnung nach Anspruch 1, **dadurch gekennzeichnet, dass** beide Gelenkwellen (21, 31) bezüglich der Querachse (Y) auf einer ersten Seite (S1) des Einzugs verlaufen.

3. Einzugsanordnung nach einem der vorangehenden Ansprüche, **dadurch gekennzeichnet, dass** ein Antrieb (3) über ein Verteilergetriebe (4) mit beiden Kraftübertragungswegen (20, 30) verbunden ist.

4. Einzugsanordnung nach einem der vorangehenden Ansprüche, **dadurch gekennzeichnet, dass** eine Vorsatz-Antriebswelle, welche zur Kraftübertragung auf einen an den Einzugsrahmen (11) ankoppelbaren Vorsatz ausgebildet ist, bezüglich der Querachse (Y) auf der zweiten Seite (S2) des Einzugs (10) verläuft.

5. Einzugsanordnung nach einem der vorangehenden Ansprüche, **dadurch gekennzeichnet, dass** die Einzugswalzen (14, 16) wenigstens eines Walzenpakets (13, 15) über ein Walzengetriebe (29, 39) kraftübertragend aneinander gekoppelt sind.

6. Einzugsanordnung nach einem der vorangehenden Ansprüche, **dadurch gekennzeichnet, dass** ein dem unteren Walzenpaket (15) zugeordnetes unteres Walzengetriebe (39) an die zweite Gelenkwelle (31) gekoppelt ist und auf der ersten Seite (S1) des Einzugs (10) angeordnet ist.

7. Einzugsanordnung nach einem der vorangehenden Ansprüche, **dadurch gekennzeichnet, dass** ein dem oberen Walzenpaket (13) zugeordnetes oberes Walzengetriebe (29) über eine obere Einzugswalze (14) an die erste Gelenkwelle (21) gekoppelt und auf der zweiten Seite (S2) des Einzugs (10) angeordnet ist.

8. Einzugsanordnung nach einem der vorangehenden Ansprüche, **dadurch gekennzeichnet, dass** wenigstens eine Gelenkwelle (21, 31) als Doppel-Gelenkwelle ausgebildet ist, mit einer wenigstens indirekt an einen Antrieb (3) gekoppelten Abtriebswelle (22, 32), einer hiermit gelenkig verbundenen Zwischenwelle (23, 33) sowie einer mit der Zwischenwelle (23, 33) gelenkig verbundenen, wenigstens indirekt an ein Walzenpaket (13, 15) gekoppelten Antriebswelle (26, 36).

9. Einzugsanordnung nach einem der vorangehenden Ansprüche, **dadurch gekennzeichnet, dass** wenigstens eine Zwischenwelle (23, 33) teleskopierend ausgebildet ist, mit zwei Wellenhälften (24, 34), die miteinander verschieblich aber verdrehsicher verbunden sind, wobei die Wellenhälften (24, 34) durch ein Sternprofil (25, 35) miteinander eingreifen.

10. Einzugsanordnung nach einem der vorangehenden Ansprüche, **dadurch gekennzeichnet, dass** ein Winkelgetriebe (28, 38), über welches ein Walzenpaket (13, 15) an eine Gelenkwelle (21, 31) gekoppelt ist, gegenüber dem Einzugsrahmen (11) schwenkbar gelagert und durch eine Koppelstange (40) mit dem Fahrzeugrahmen (2) verbunden ist, welche mit dem oberen Winkelgetriebe (28, 38) und dem Fahrzugrahmen (2) schwenkbar verbunden ist.

11. Einzugsanordnung nach einem der vorangehenden Ansprüche, **dadurch gekennzeichnet, dass** die Verlaufsrichtungen (R1, R3) einer Abtriebswelle (22, 32) und einer Antriebswelle (26, 36) einer Gelenkwelle (21, 31) unabhängig von der Position des Einzugsrahmens (11) und der Position des an diese Gelenkwelle (21, 31) gekoppelten Walzenpakets (13, 15) nach Art einer Z-Anordnung um weniger als 10° voneinander abweichen.

12. Einzugsanordnung nach einem der vorangehenden Ansprüche, **dadurch gekennzeichnet, dass** in der Absenkposition des Einzugsrahmens (11) ein erster Winkel (α) zwischen den Verlaufsrichtungen (R4, R5) einer Abtriebswelle (22, 32) und einer Zwischenwelle (23, 33) einer Gelenkwelle (31) und ein zweiter Winkel (β) zwischen den Verlaufsrichtungen (R5, R6) der Zwischenwelle (23, 33) und einer Antriebswelle (26, 36) dieser Gelenkwelle (31) nach Art einer W-Anordnung um weniger als 5° voneinander abweichen.

13. Einzugsanordnung nach einem der vorangehenden Ansprüche, **dadurch gekennzeichnet, dass** in der Hubposition des Einzugsrahmens (11) die Verlaufsrichtungen (R4, R6) der Abtriebswelle (22, 32) und der Antriebswelle (26, 36) einer Gelenkwelle (31) nach Art einer Z-Anordnung um weniger als 10° voneinander abweichen.

14. Einzugsanordnung nach dem Oberbegriff des Anspruchs 1, **dadurch gekennzeichnet, dass** wenigstens ein Walzenpaket (13, 15) über wenigstens eine Gelenkwelle (21, 31) an den wenigstens einen Antrieb (3) gekoppelt ist, welche Gelenkwelle (21, 31) als Doppel-Gelenkwelle ausgebildet ist, mit einer wenigstens indirekt an einen Antrieb (3) gekoppelten Abtriebswelle (22, 32), einer hiermit gelenkig verbundenen Zwischenwelle (23, 33) sowie einer mit der Zwischenwelle (23, 33) gelenkig verbundenen Antriebswelle (26, 36), wobei das wenigstens eine Walzenpaket (13, 15) über ein Winkelgetriebe (28, 38) an die Gelenkwelle (21, 31) gekoppelt ist, welches gegenüber dem Einzugsrahmen (11) schwenkbar gelagert und durch eine Koppelstange (40) mit dem Fahrzeugrahmen (2) verbunden ist, welche mit dem Winkelgetriebe (28, 38) und dem Fahrzugrahmen (2) schwenkbar verbunden ist.

15. Landmaschine (50), aufweisend einen Fahrzeugrahmen (2) sowie einen Einzug (10) mit einem Einzugsrahmen (11), an welchem ein oberes Walzenpaket (13), mit einer Mehrzahl von oberen Einzugswalzen (14), sowie ein unteres Walzenpaket (15), mit einer Mehrzahl von unteren Einzugswalzen (16), gelagert sind, wobei der Einzugsrahmen (11) gegenüber dem Fahrzeugrahmen (2) zwischen einer Absenkposition und einer Hubposition verstellbar ist und wenigstens ein Walzenpaket (13, 15) gegenüber dem Einzugsrahmen (11) verstellbar ist, wobei beide Walzenpakete (13, 15) durch wenigstens einen am Fahrzeugrahmen angeordneten Antrieb (3) antreibbar sind,
**dadurch gekennzeichnet, dass**
der wenigstens eine Antrieb (3) über einen ersten Kraftübertragungsweg (20), aufweisend eine erste Gelenkwelle (21), mit dem oberen Walzenpaket (13) verbunden ist und über einen zum ersten Kraftübertragungsweg (20) mechanisch parallelen zweiten Kraftübertragungsweg (30), aufweisend eine zweite Gelenkwelle (31), mit dem unteren Walzenpaket (15) verbunden ist, wobei beide Gelenkwellen (21, 31) bezüglich einer Querachse (Y) seitlich des Einzugs (10) verlaufen und sich bezüglich einer Längsachse (X) vorwärts erstrecken.
